# EUROPÄISCHE PATENTSCHRIFT

(11) **EP 1 957 335 B1**
(45) Veröffentlichungstag und Bekanntmachung des Hinweises auf die Patenterteilung: **07.10.2009**
(21) Anmeldenummer: 06840944.0
(22) Anmeldetag: 17.11.2006
(51) Int. Cl.: B60T 17/00, B60T 17/02

(54) **DRUCKLUFTAUFBEREITUNGSEINRICHTUNG UND VERFAHREN ZUM BETREIBEN EINER DRUCKLUFTAUFBEREITUNGSEINRICHTUNG**
DEVICE FOR THE PROCESSING OF COMPRESSED AIR, AND METHOD FOR THE OPERATION THEREOF
DISPOSITIF POUR TRAITER DE L'AIR COMPRIME, ET PROCEDE POUR LE FAIRE FONCTIONNER

(30) Priorität: 30.11.2005 DE 102005057004
(43) Veröffentlichungstag der Anmeldung: 20.08.2008
(73) Patentinhaber: KNORR-BREMSE Systeme für Nutzfahrzeuge GmbH, 80809 München (DE)
(72) Erfinder: ERTL, Thomas, 80995 München (DE)
(74) Vertreter: Mattusch, Gundula
(86) Internationale Anmeldenummer: PCT/EP2006/011031
(87) Internationale Veröffentlichungsnummer: WO 2007/062750

(56) Entgegenhaltungen:
- EP-A- 1 527 974
- EP-A1- 1 502 778
- WO-A-02/24506
- DE-A1- 19 835 638

## Beschreibung

Die Erfindung betrifft eine Druckluftaufbereitungseinrichtung für ein Nutzfahrzeug, mit einem Eingangsanschluss zum Anschließen eines Kompressors, einer Entlüftung, einem Kompressor-Steuerausgang zur Druckbeaufschlagung eines Steuereingangs des Kompressors, einer Lufttrocknereinheit, einem dem Eingangsanschluss in Strömungsrichtung nachgeordneten pneumatisch ansteuerbaren Absperrventil, das durch Druckbeaufschlagung von einem geöffneten in einen geschlossenen Zustand überführbar ist, einem zwischen einem Ausgangsanschluss des Absperrventils und der Entlüftung angeordneten pneumatisch ansteuerbaren Druckregelventil, das durch Druckbeaufschlagung von einem geschlossenen in einen geöffneten Zustand überführbar ist, eine ein erstes Magnetventil aufweisende Kompressor-Steuereinrichtung, über die in einem erregten Zustand des ersten Magnetventils einem Steuereingang des Absperrventils und dem Kompressor-Steuerausgang Druckluft zuführbar ist, einem zweiten Magnetventil, das im erregten Zustand eine Rückströmung von Druckluft durch die Lufttrocknereinheit und das Druckregelventil zur Entlüftung zulässt und über das im erregten Zustand ein Steuereingang des Druckregelventils mit Druckluft beaufschlagbar ist.

Die Erfindung betrifft weiterhin verschiedene Verfahren zum Betreiben einer solchen Druckluftaufbereitungseinrichtung. Druckluftaufbereitungseinrichtungen enthalten als zentrale Komponenten einen Druckregler, eine Lufttrocknereinheit und ein Mehrkreisschutzventil. Bei elektronischer Auslegung der Druckluftaufbereitungseinrichtung ist als weitere wesentliche Komponente eine elektronische Steuerung in die Einrichtung integriert. Der Druckluftaufbereitungseinrichtung wird von einem Kompressor Druckluft zugeführt, wobei diese zugeführte Druckluft über die Lufttrocknereinheit und das Mehrkreisschutzventil verschiedenen Verbrauchern eines Nutzfahrzeugs zugeleitet wird, beispielsweise dem Bremssystem von Zugfahrzeug und Anhänger, einer Liftachseinrichtung und sonstigen so genannten Nebenverbrauchern. Das Mehrkreisschutzventil dient dabei insbesondere den Zwecken, die Füllreihenfolge der verschiedenen Verbraucherkreise zu steuern und die verschiedenen Kreise gegeneinander abzusichern beziehungsweise in geeigneter Weise nachzufüllen. Der Druckregler ist vorgesehen, um bei Überschreiten eines maximal zulässigen Systemdrucks, das heißt im Falle nicht benötigter zusätzlicher Druckluft, die überflüssige Druckluft über eine Entlüftung abzulassen. Die Lufttrocknereinheit ist vorgesehen, um den Verbrauchern getrocknete und gereinigte Luft zuzuführen und hierdurch einen frühzeitigen Verschleiß der Verbraucher durch Korrosion und vergleichbare Vorgänge zu vermeiden.

Da die Lufttrocknereinheit während des Betriebs der Druckluftaufbereitungseinrichtung mit Feuchtigkeit und sonstigen Fremdpartikeln beladen wird, ist es erforderlich, diese von Zeit zu Zeit zu regenerieren, entweder in regelmäßigen Zeitabständen oder wenn bestimmte Vorraussetzungen vorliegen, beispielsweise ein Signal eines Feuchtesensors. Die Regeneration der Luftaufbereitungsanlage erfolgt dann dadurch, dass aus den zuvor mit trockener Druckluft befüllten Vorratsbehältern Luft entnommen wird, die die Lufttrocknereinheit in eine Richtung durchströmt, die der Strömungsrichtung beim Befüllen des Systems entgegengesetzt ist. Da eine Strömung in eine solche Richtung außerhalb der Regenerationsphasen unerwünscht ist, ist diese durch ein der Lufttrocknereinheit nachgeordnetes Rückschlagventil unterbunden. Während der Regenerationsphasen wird dieses Rückschlagventil durch Umschalten eines Magnetventils umgangen.

Für den Betrieb des Kompressors während der Regenerationsphasen existieren verschiedene Konzepte. Beispielsweise ist es möglich, den Kompressor im Leerlauf weiterfördern zu lassen, das heißt die vom Kompressor gelieferte Luft über eine Entlüftungsleitung abzulassen. Andere Konzepte sehen zum Zwecke der Energiesparung vor, den Kompressor während der Regenerationsphase abzuschalten. Um dies zu ermöglichen, ist an der Druckluftaufbereitungseinrichtung ein Kompressor-Steuerausgang vorgesehen, an dem ein Steuereingang des Kompressors angeschlossen wird. Hierdurch ist es möglich, dem Steuereingang des Kompressors gezielt Druckluft zuzuführen, um diesen abzuschalten.

In der WO 02/24506 A1 wird ein solches Konzept, bei dem eine Abschaltung des Kompressors erfolgt, anhand mehrerer Ausführungsformen beschrieben. Gemäß einer dieser Ausführungsformen ist vorgesehen, zusätzlich zur Abschaltung des Kompressors ein Absperrventil in der Förderleitung des Kompressors zu schließen, um auf diese Weise einen unnötigen Druckverlust in der Förderleitung zu vermeiden. Bei der Wiederinbetriebnahme des Kompressors muss hierdurch ein geringeres Volumen neu auf den gewünschten Druck gebracht werden. Allerdings wird gemäß diesem Ausführungsbeispiel der WO 02/24506 A1 lediglich ein Druckabbau stromabwärts des Absperrventils verhindert.

Der Erfindung liegt die Aufgabe zugrunde, eine Druckluftaufbereitungseinrichtung mit verbesserten Eigenschaften zur Verfügung zu stellen, wobei insbesondere ein unnötiger Druckverlust in der Kompressorleitung vermieden werden soll.

Diese Aufgabe wird mit den Merkmalen der unabhängigen Ansprüche gelöst. Vorteilhafte Ausführungsformen der Erfindung sind in den abhängigen Ansprüchen angegeben.

Die Erfindung baut auf der gattungsgemäßen Druckluftaufbereitungseinrichtung dadurch auf, dass bei erregtem erstem Magnetventil der Druck in einer Leitung zwischen dem Kompressor und dem Absperrventil im Wesentlichen erhalten bleibt. Folglich muss das unter Druck gehaltene Volumen bei Wiederaufnahme des Kompressorbetriebs nicht neu befüllt werden, wodurch eine Energie- und eine Zeiteinsparung bewirkt werden.

Diese Funktionalität kann insbesondere dadurch realisiert sein, dass das erste Magnetventil neben einer Ansteuerung des Absperrventils und des Steuerventils keine weiteren die Leitung zwischen dem Kompressor und dem Absperrventil betreffenden Steuerfunktionen übernimmt. Neben der Druckbeaufschlagung des Kompressor-Steuereingangs steuert das erste Magnetventil also lediglich das Absperrventil an, wobei insbesondere keine Ansteuerung eines weiteren Ventils erfolgt, über das Druckluft aus der Kompressorleitung entweichen könnte. Der Druck im Leitungsbereich stromaufwärts des Absperrventils bleibt daher bei abgeschaltetem Kompressor erhalten.

Es ist bevorzugt, dass die Kompressor-Steuereinrichtung ein Steuerventil aufweist, dass dem Kompressor-Steuerausgang von dem ersten Magnetventil gelieferte Druckluft über das Steuerventil zuführbar ist und dass in Abwesenheit von von dem ersten Magnetventil gelieferter Druckluft das Steuerventil den Kompressor-Steuerausgang mit der Entlüftung verbindet. Da die Kompressor-Steuereinrichtung ein Magnetventil und ein Steuerventil aufweist, können die Be- und Entlüftung der beteiligten Steuereingänge sicher und kontrolliert erfolgen. Insbesondere wird über das Steuerventil dem Steuereingang des Kompressors zwar Druckluft zugeführt, die direkt von dem Magnetventil geliefert wird, eine Entlüftung des Steuereingangs muss aber nicht über das Magnetventil erfolgen, da das Steuerventil eine direkte Verbindung des Kompressor-Steuerausgangs mit der Entlüftung zur Verfügung stellen kann.

Weiterhin kann vorgesehen sein, dass das Absperrventil mittels Federkraft in seinen geöffneten Zustand überführbar ist. Das Absperrventil ist somit unabhängig vom Förderdruck des Kompressors stets geöffnet, wenn der Steuereingang des Absperrventils nicht mit Druckluft beaufschlagt ist. Durch eine solche Druckbeaufschlagung des Steuereingangs kann das Absperrventil dann gegen die Federkraft geschlossen werden.

Besonders nützlich ist es, dass ein Sicherheitsventil vorgesehen ist, das den Druck in der Leitung zwischen dem Kompressor und dem Absperrventil begrenzt. Da die Kompressorförderleitung stromaufwärts des Absperrventils in der Förderpause nicht entlüftet wird, ist es nützlich, ein Sicherheitsventil vorzusehen, um auf diese Weise eine Drucküberhöhung in dem genannten Leitungszweig zu verhindern. Ein solches Sicherheitsventil kann innerhalb der Druckluftaufbereitungseinrichtung vorgesehen oder auch als externe Komponente realisiert sein. Als besondere Ausführungsform bietet ein Absperrventil mit integriertem Sicherheitsventil die vollständige Funktionalität im Hinblick auf das Aufrechterhalten des Druckes und die erforderliche Sicherheit bei gleichzeitig geringem Montageaufwand und geringem erforderlichem Bauraum.

Die Erfindung betrifft weiterhin ein Verfahren zum Betreiben einer erfindungsgemäßen Druckluftaufbereitungseinrichtung mit den Schritten:
- Überführen des ersten Magnetventils in einen erregten Zustand,
- Überführen des zweiten Magnetventils in einen erregten Zustand,
- Aufrechterhalten dieser Zustände zum Zwecke der Regeneration der Lufttrocknereinheit, wobei ein Druck in einer Leitung zwischen dem Kompressor und dem Absperrventil im Wesentlichen erhalten bleibt,
- Überführen des zweiten Magnetventils in einen nicht erregten Zustand und
- Überführen des ersten Magnetventils in einen nicht erregten Zustand.

Gemäß diesem Verfahren wird die Regeneration der Lufttrocknereinheit in der Druckluftaufbereitungseinrichtung unter gleichzeitigem Aufrechterhalten des Drucks in der Kompressorförderleitung realisiert.

Die Erfindung stellt weiterhin aber auch in einem Verfahren zum Betreiben einer erfindungsgemäßen Druckluftaufbereitungseinrichtung mit den folgenden Schritten zur Verfügung:
- Überführen des zweiten Magnetventils in einen erregten Zustand und
- Aufrechterhalten eines nicht erregten Zustands des ersten Magnetventils und des erregten Zustands des zweiten Magnetventils zum Zwecke der Regeneration einer Leitung zwischen dem Kompressor und der Druckluftaufbereitungseinrichtung.

Auf diese Weise können Feuchtigkeit und Verschmutzungen aus der Kompressorförderleitung bei Bedarf entfernt werden, da der Kompressor bei den beschriebenen Schaltzuständen der Magnetventile in Richtung der Entlüftung weiterfördert.

Das Verfahren kann in nützlicher Weise dadurch weitergebildet sein, dass es in regelmäßigen zeitlichen Abständen ausgeführt wird.

Alternativ oder zusätzlich kann aber auch vorgesehen sein, dass es bei Vorliegen einer oder mehrerer Bedingungen ausgeführt wird. Derartige Ereignisse können beispielsweise durch die Erfassung bestimmter Messwerte von Sensoren gegeben sein, beispielsweise Druck- und/oder Temperatursensoren.

Die Erfindung wird nun mit Bezug auf die begleitenden Zeichnungen anhand besonders bevorzugter Ausführungsformen beispielhaft erläutert.

Es zeigen:
- Figur 1: ein Schaltungsdiagramm eines Teils einer ersten Ausführungsform einer erfindungsgemäßen Druckluftaufbereitungseinrichtung;
- Figur 2: ein Schaltungsdiagramm eines Teils einer zweiten Ausführungsform einer erfindungsgemäßen Druckluftaufbereitungseinrichtung;
- Figur 3: ein Schaltungsdiagramm eines Teils einer dritten Ausführungsform einer erfindungsgemäßen Druckluftaufbereitungseinrichtung;
- Figur 4: ein Schaltungsdiagramm eines Teils einer vierten Ausführungsform einer erfindungsgemäßen Druckluftaufbereitungseinrichtung;
- Figur 5: eine Schnittansicht einer ersten Ausführungsform eines Absperrventils;
- Figur 6: eine Schnittansicht einer zweiten Ausführungsform eines Absperrventils;
- Figur 7: eine Schnittansicht einer dritten Ausführungsform eines Absperrventils mit integriertem Sicherheitsventil;
- Figur 8: eine Schnittansicht einer ersten Ausführungsform eines Sicherheitsventils;
- Figur 9: eine Schnittansicht einer zweiten Ausführungsform eines Sicherheitsventils; und
- Figur 10: eine Schnittansicht einer dritten Ausführungsform eines Sicherheitsventils;

Bei der nachfolgenden Beschreibung der Zeichnungen bezeichnen gleiche Bezugszeichen gleiche oder vergleichbare Komponenten.

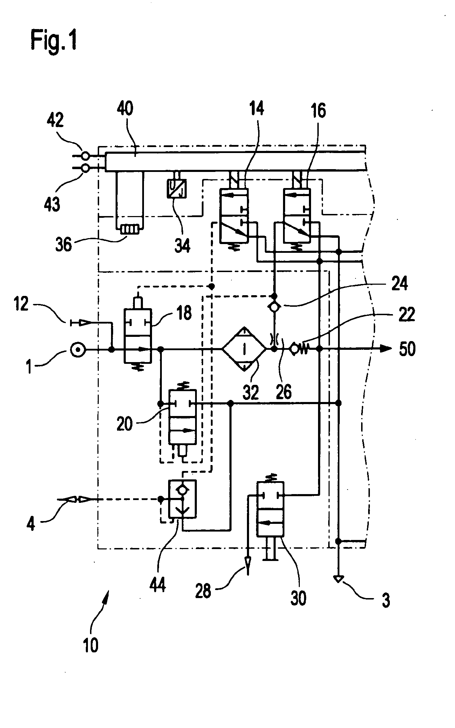

Figur 1 zeigt ein Schaltungsdiagramm eines Teils einer ersten Ausführungsform einer erfindungsgemäßen Druckluftaufbereitungseinrichtung. Die erfindungsgemäße Druckluftaufbereitungseinrichtung 10 hat einen Drucklufteingang 1, dem Druckluft von einem nicht dargestellten Kompressor zuführbar ist. Parallel zu dem Drucklufteingang 1 ist ein Fremdbefüllungsanschluss 12 vorgesehen, über den das Druckluftsystem des Nutzfahrzeugs beispielsweise in einer Werkstatt ohne den Betrieb des Kompressors befüllt werden kann. Weiterhin ist eine Entlüftung 3 vorhanden. Über den Drucklufteingang 1 gelangt Druckluft zu einer Lufttrocknereinheit 32 und von dort über ein Rückschlagventil 22 über eine nicht dargestellte Mehrkreisschutzventileinrichtung zu nicht dargestellten Druckluftverbrauchern 50. Das Rückschlagventil 22 ist vorgesehen, um ein Rückströmen von Druckluft von den Verbrauchern 50 in Richtung der Lufttrocknereinheit 32 zu vermeiden. Um aber eine erwünschte Rückströmung von trockener Druckluft aus den Behältern durch die Lufttrocknereinheit 32 zum Zwecke der Regeneration zu ermöglichen, ist ein Magnetventil 16 vorgesehen, über das das Rückschlagventil 22 bei entsprechendem Schaltzustand umgehbar ist. Das Magnetventil 16 ist mit einem Rückschlagventil 24 und einer Drossel 26 in Reihe geschaltet. Das Rückschlagventil 24 vermeidet während der Förderphasen des Kompressors ein Überströmen von Druckluft über das Magnetventil 16 zur Entlüftung 3. Die Drossel ist vorgesehen, um die Strömungsgeschwindigkeit in einer die Regeneration begünstigenden Weise zu begrenzen. Stromaufwärts des Rückschlagventils 24 ist eine Steuerleitung angeschlossen, die zu einem Druckregelventil 20 führt. Das Druckregelventil 20 ist zwischen die Eingangsseite der Lufttrocknereinheit 32 und die Entlüftung 3 geschaltet. Es ist ein weiteres Magnetventil 14 vorgesehen. Über dieses weitere Magnetventil 14 kann ein Steuereingang eines Absperrventils 18 mit Druck beaufschlagt werden, wobei hierdurch das Absperrventil 18 in eine geschlossene Stellung überführt wird. Über das Magnetventil 14 wird aber auch einem Kompressor-Steuerausgang 4 über ein Steuerventil 44 Druck zugeführt. Das Steuerventil 44 ist so ausgelegt, dass es bei fehlender Druckbeaufschlagung durch das Magnetventil 14 den Kompressor-Steuerausgang 4 mit der Entlüftung 3 verbindet, wobei auf diese Weise eine rasche Entlüftung und somit ein sicherer Betrieb des Kompressors im Hinblick auf seine Wiederinbetriebnahme zur Verfügung gestellt wird. Weitere Komponenten der dargestellten Druckluftaufbereitungseinrichtung 10 sind eine elektronische Steuereinheit 40, über die die Magnetventile 14, 16 unabhängig erregt werden können. Mit der elektronischen Steuereinheit 40 stehen weiterhin ein Temperatursensor 34 sowie eine Heizung 36 in Verbindung. Die elektronische Steuereinheit 40 hat als Schnittstelle zur sonstigen Fahrzeugelektronik einen Zentralstecker 42. Es ist ferner ein optionaler Feuchtestecker 43 vorgesehen, über den ein Signal eines externen nicht dargestellten Feuchtesensors eingelesen werden kann. Dieser ist üblicherweise am tiefsten Punkt eines der Betriebsbremsdruckluftbehälter angebracht. Die elektronische Steuereinheit 40 kann weitere nicht dargestellte Komponenten ansteuern insbesondere Magnetventile, und es können weitere Sensoren zur Überwachung, Steuerung und Regelung des Systems vorgesehen sein, insbesondere Feuchtigkeits-, Temperatur- und Drucksensoren. Es ist weiterhin ein Reifenfüllventil 30 zu erkennen, das zwischen die zu den Verbrauchern 50 führende Leitung und einen Reifenfüllanschluss 28 geschaltet ist. Das Reifenfüllventil 30 kann bei Bedarf betätigt werden, um über den Reifenfüllanschluss 28 Druckluft zu entnehmen.

Die dargestellte Druckluftaufbereitungseinrichtung 10 arbeitet wie folgt. Während des normalen Förderbetriebs fördert der Kompressor Druckluft in den Drucklufteingang 1. Das Absperrventil 18 befindet sich in seiner dargestellten geöffneten Position. Folglich gelangt Druckluft durch die Lufttrocknereinheit 32 und über das Rückschlagventil 22 sowie das Mehrkreisschutzventil zu den Verbrauchern 50. Während dieses normalen Betriebs wird die Lufttrocknereinheit 32 mit Feuchtigkeit und Fremdpartikeln, beispielsweise Kompressoröl und dessen Zersetzungsprodukten, beladen. Um eine Regeneration der Lufttrocknereinheit 32 zu veranlassen, werden beide Magnetventile 14 und 16 in ihre nicht dargestellte Position überführt, so dass einerseits über das Magnetventil 16 die Regenerationsluftströmung durch das Rückschlagventil 24, die Drossel 26, die Lufttrocknereinheit 32, das aufgrund der Umschaltung des Magnetventils 16 ebenfalls umgeschaltete Druckregelventil 20 und die Entlüftung 3 erfolgen kann. Um einen Druckverlust aus der mit dem Kompressor in Verbindung stehenden Leitung zu vermeiden, wird mit Abschaltung des Kompressors mittels Umschaltung des Magnetventils 14 und Druckbeaufschlagung des Kompressor-Steuerausgangs 4 über das Steuerventil 44 auch das Absperrventil 18 umgeschaltet, so dass es seine Sperrstellung einnimmt. Zur Wiederaufnahme des Förderbetriebs nach der Regeneration werden die Magnetventile 14 und 16 wieder in ihre dargestellten Stellungen überführt, so dass die mit ihnen in Verbindung stehenden Steuereingänge entlüftet werden, wobei die Entlüftung des Steuereingangs des Kompressors auf direktem Wege ohne einen Umweg über ein Magnetventil erfolgen kann.

Neben dem normalen Förderbetrieb und dem Regenerationsbetrieb ermöglicht die erfindungsgemäße Druckluftaufbereitungseinrichtung 10 eine weitere Betriebsart, bei der Feuchtigkeit und Verunreinigungen aus der Kompressorleitung entfernt werden können. Diese Betriebsart ist realisierbar, in dem das Magnetventil 16 umgeschaltet wird, das Magnetventil 14 aber in seiner dargestellten Stellung verbleibt. Folglich fördert der Kompressor weiter, jedoch mit verringerter Last in Richtung Entlüftung. Dies hat zur Folge, dass in der Förderleitung angesammelte Feuchtigkeit und Schmutz mit der Druckluft ausgetrieben werden.

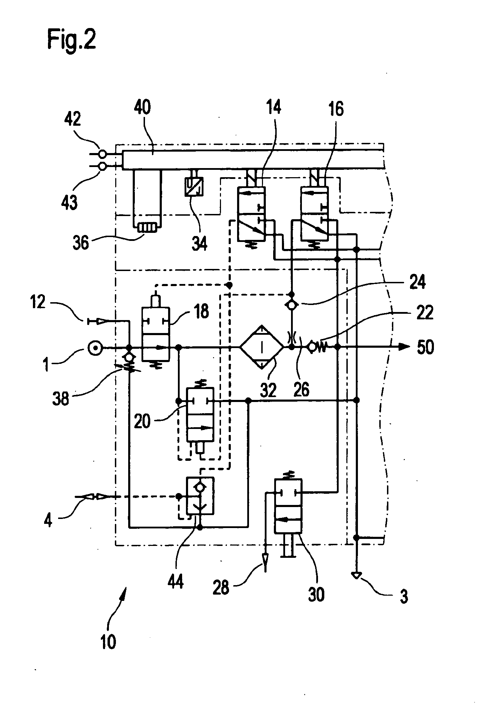

Figur 2 zeigt ein Schaltungsdiagramm eines Teils einer zweiten Ausführungsform einer erfindungsgemäßen Druckluftaufbereitungseinrichtung. Die hier dargestellte Druckluftaufbereitungseinrichtung 10 hat zusätzlich zu der in Figur 1 dargestellten Einrichtung ein Sicherheitsventil 38, das zwischen den Drucklufteingang 1 und die Entlüftung 3 geschaltet ist. Durch dieses Sicherheitsventil 38 wird der Druck in der Kompressorförderleitung begrenzt, so dass insbesondere ein Nachfördern des Kompressors nach umgeschaltetem Absperrventil 18 nicht zu einer unerwünschten übermäßigen Druckerhöhung führt. Das hier dargestellte Sicherheitsventil 38 ist in die Druckluftaufbereitungseinrichtung 10 integriert.

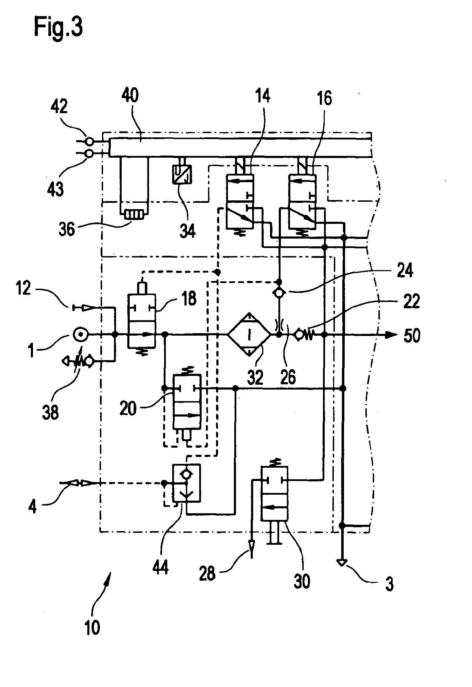

Figur 3 zeigt ein Schaltungsdiagramm eines Teils einer dritten und vierten Ausführungsform einer erfindungsgemäßen Druckluftaufbereitungseinrichtung. Auch hier ist ein Sicherheitsventil 38 zur Druckbegrenzung vorgesehen, wobei dieses jedoch außerhalb der Druckluftaufbereitungseinrichtung 10 angeordnet ist.

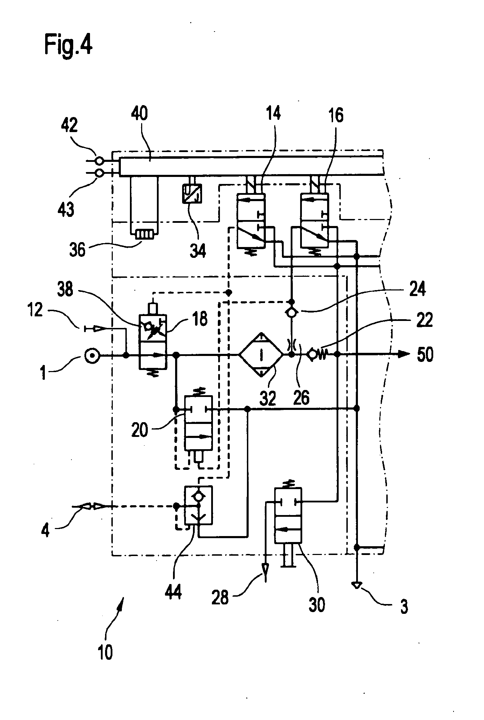

Figur 4 zeigt ein Schaltungsdiagramm eines Teils einer dritten und vierten Ausführungsform einer erfindungsgemäßen Druckluftaufbereitungseinrichtung. Die hier dargestellte Ausführungsform weist ebenfalls ein Sicherheitsventil 38 auf. Dieses ist in das Absperrventil 18 integriert. Zu diesem Zweck ist das Absperrventil 18 im Vergleich zu den in Figuren 1 bis 3 dargestellten Absperrventilen mit einem weiteren Anschluss ausgestattet.

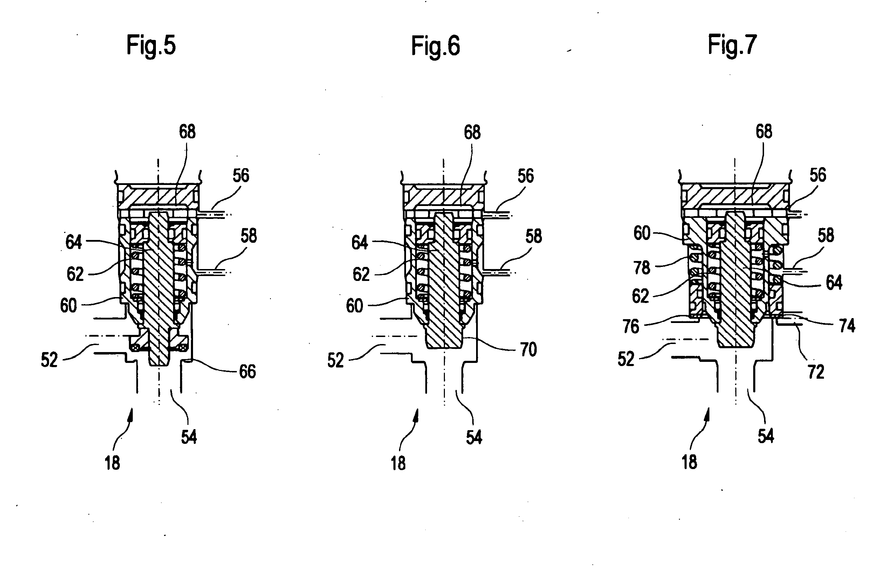

Figur 5 zeigt eine Schnittansicht einer ersten Ausführungsform eines Absperrventils. Das Absperrventil 18 hat einen Eingangsanschluss 52 und einen Ausgangsanschluss 54. Der Eingangsanschluss 52 ist mit dem Kompressor verbunden. Der Ausgangsanschluss 54 führt zu der Lufttrocknereinheit. Auf einem Ventilgehäuse 60 stützt sich eine Feder 62 ab, die einen ventilkörper 64 mittels der Federkraft in eine einen Ventilsitz 66 freigebende Richtung treibt. Weiterhin sind ein Steueranschluss 56 und eine Sekundärentlüftung 58 vorgesehen. Die Sekundärentlüftung ist vorhanden, damit sich im Federraum kein störender gegen den Schaltdruck gerichteter Druck aufbauen kann. Durch Druckbeaufschlagung des Steueranschlusses 56 und hierdurch bewirkten Druckaufbau in einer Steuerkammer 68 kann die Feder 62 komprimiert werden, bis der Ventilsitz 66 die Verbindung zwischen dem Eingangsanschluss 52 und dem Ausgangsanschluss 54 sperrt.

Figur 6 zeigt eine Schnittansicht einer zweiten Ausführungsform eines Absperrventils. Das Absperrventil 18 ist ähnlich dem in Figur 5 dargestellten Absperrventil, wobei es jedoch nicht als Sitzventil ausgebildet, sondern mit einem Stößel 70 ausgestattet ist.

Figur 7 zeigt eine Schnittansicht einer dritten Ausführungsform eines Absperrventils mit integriertem Sicherheitsventil. Das hier dargestellte Absperrventil baut auf dem Absperrventil gemäß Figur 6 auf. Es weist einen zusätzlichen Ausgangsanschluss 72 auf, der zusammen mit einem Ventilsitz 74, einem Ventilkörper 76 und einer Feder 78 ein Sicherheitsventil bildet. Ist das Absperrventil 18 aufgrund einer Druckbeaufschlagung der Steuerkammer 68 geschlossen, so kann ein übermäßiger Druck am Eingangsanschluss 52 über den Ventilsitz 74 und den Ausgangsanschluss 72 abgebaut werden.

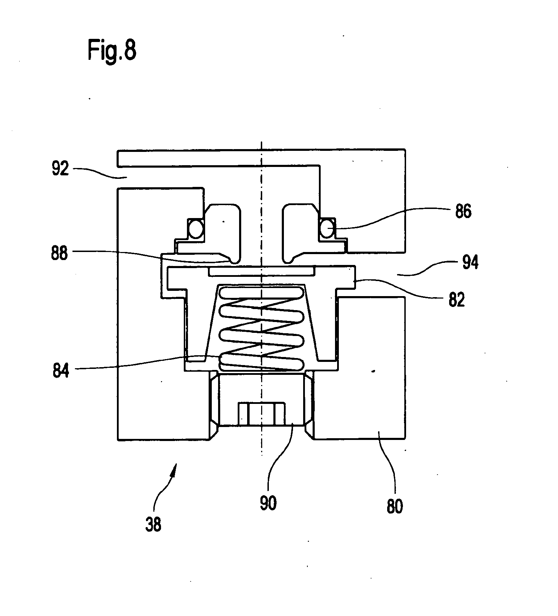

Figur 8 zeigt eine Schnittansicht einer ersten Ausführungsform eines Sicherheitsventils. Das Sicherheitsventil 38 hat ein Ventilgehäuse 80, in dem ein Ventilkörper 82 angeordnet ist. Der Ventilkörper 82 wird von einer Druckfeder 84 in Richtung eines über eine Dichtung 86 in dem Gehäuse angeordneten Ventilsitzes 88 getrieben. Die von der Druckfeder 84 auf den Ventilkörper 82 ausgeübte Kraft ist über eine Einstellschraube 90 einstellbar. Liegt an dem Eingangsanschluss 92 ein Druck an, so dass die von der Druckfeder 84 auf den Ventilkörper 82 ausgeübte Kraft überschritten wird, kann der Druck über den Ventilsitz 88 und den Ausgangsanschluss 94 abgebaut werden.

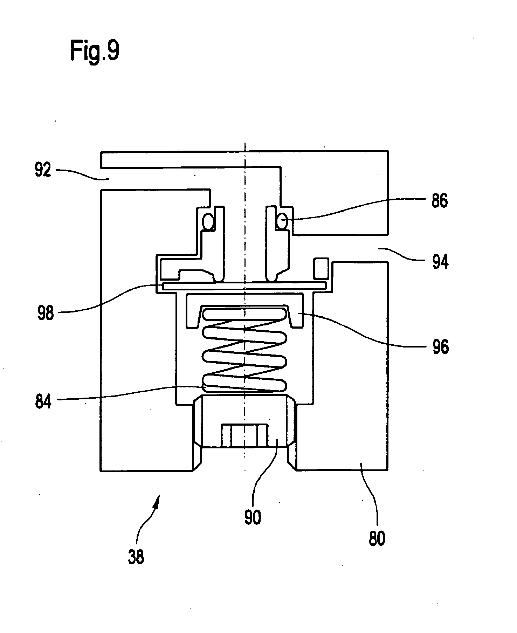

Figur 9 zeigt eine Schnittansicht einer zweiten Ausführungsform eines Sicherheitsventils. Das hier dargestellte Sicherheitsventil 38 ist ähnlich dem in Figur 8 dargestellten Sicherheitsventil aufgebaut, wobei es jedoch nicht mit einem Ventilkörper sondern mit einer auf einem Stützteller 96 aufliegenden Membran 98 ausgebildet ist. Die Membran 98 ist an ihrem Umfang fest mit dem Ventilgehäuse 80 verbunden, wobei sie aufgrund ihrer Elastizität unter Kompression der Druckfeder 84 den Ventilsitz 88 sperren bzw. freigeben kann.

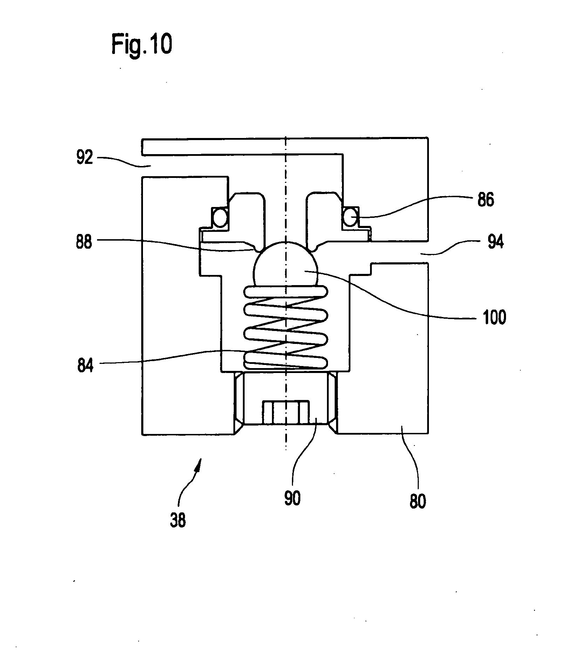

Figur 10 zeigt eine Schnittansicht einer dritten Ausführungsform eines Sicherheitsventils. Das hier dargestellte Sicherheitsventil 18 ist als Kugelventil ausgebildet. Eine Kugel 100 sitzt auf einer sich auf einer Einstellschraube 90 abstützenden Druckfeder 84, wobei sie mittels der Druckfeder 84 auf einen Ventilsitz 74 gepresst wird. Ein übermäßiger Druck am Eingangsanschluss 92 kann dadurch abgebaut werden, dass die auf die Kugel 100 aufgrund des. Druckes wirkende Kraft die Druckfeder 84 komprimiert, wodurch die Verbindung zwischen dem Eingangsanschluss 92 und dem Ausgangsanschluss 94 über den Ventilsitz 88 freigegeben wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Drucklufteingang
- 3: Entlüftung
- 4: Kompressor-Steuerausgang
- 10: Druckluftaufbereitungseinrichtung
- 12: Fremdbefüllungsanschluss
- 14: erstes Magnetventil
- 16: zweites Magnetventil
- 18: Absperrventil
- 20: Druckregelventil
- 22: Rückschlagventil
- 24: Rückschlagventil
- 26: Drossel
- 28: Reifenfüllanschluss
- 30: Reifenfüllventil
- 32: Lufttrocknereinheit
- 34: Temperatursensor
- 36: Heizung
- 38: Sicherheitsventil
- 40: elektronische Steuereinheit
- 42: Zentralstecker
- 43: Feuchtestecker
- 44: Steuerventil
- 50: Verbraucher
- 52: Eingangsanschluss
- 54: Ausgangsanschluss
- 56: Steueranschluss
- 58: Sekundärentlüftung
- 60: Ventilgehäuse
- 62: Feder
- 64: Ventilkörper
- 66: Ventilsitz
- 68: Steuerkammer
- 70: Stößel
- 72: Ausgangsanschluss
- 74: Ventilsitz
- 76: Ventilkörper
- 78: Feder
- 80: ventilgehäuse
- 82: Ventilkörper
- 84: Druckfeder
- 86: Dichtung
- 88: Ventilsitz
- 90: Einstellschraube
- 92: Eingangsanschluss
- 94: Ausgangsanschluss
- 96: Stützteller
- 98: Membran
- 100: Kugel

## Patentansprüche

1. Druckluftaufbereitungseinrichtung für ein Nutzfahrzeug, mit
- einem Eingangsanschluss (1) zum Anschließen eines Kompressors,
- einer Entlüftung (3),
- einem Kompressor-Steuerausgang (4) zur Druckbeaufschlagung eines Steuereingangs des Kompressors,
- einer Lufttrocknereinheit (32),
- einem dem Eingangsanschluss (1) in Strömungsrichtung nachgeordneten pneumatisch ansteuerbaren Absperrventil (18), das durch Druckbeaufschlagung von einem geöffneten in einen geschlossenen Zustand überführbar ist,
- einem zwischen einem Ausgangsanschluss des Absperrventils (18) und der Entlüftung (3) angeordneten pneumatisch ansteuerbaren Druckregelventil (20), das durch Druckbeaufschlagung von einem geschlossenen in einen geöffneten Zustand überführbar ist,
- eine ein erstes Magnetventil (14) aufweisende Kompressor-Steuereinrichtung (14, 44), über die in einem erregten Zustand des ersten Magnetventils einem Steuereingang des Absperrventils (18) und dem Kompressor-Steuerausgang (4) Druckluft zuführbar ist,
- einem zweiten Magnetventil (16), das im erregten Zustand eine Rückströmung von Druckluft durch die Lufttrocknereinheit (32) und das Druckregelventil (20) zur Entlüftung (3) zulässt und über das im erregten Zustand ein Steuereingang des Druckregelventils (20) mit Druckluft beaufschlagbar ist,
**dadurch gekennzeichnet, dass** bei erregtem erstem Magnetventil (14) der Druck in einer Leitung zwischen dem Kompressor und dem Absperrventil (18) im Wesentlichen erhalten bleibt.

2. Druckluftaufbereitungseinrichtung nach Anspruch 1, **dadurch gekennzeichnet, dass** das erste Magnetventil (14) neben einer Ansteuerung des Absperrventils und des Steuerventils keine weiteren die Leitung zwischen dem Kompressor und dem Absperrventil betreffenden Steuerfunktionen übernimmt.

3. Druckluftaufbereitungseinrichtung nach Anspruch 1 oder 2, **dadurch gekennzeichnet,**
- **dass** die Kompressor-Steuereinrichtung (14, 44) ein Steuerventil (44) aufweist,
- **dass** dem Kompressor-Steuerausgang (4) von dem ersten Magnetventil (14) gelieferte Druckluft über das Steuerventil (44) zuführbar ist und
- **dass** in Abwesenheit von von dem ersten Magnetventil (14) gelieferter Druckluft das Steuerventil (44) den Kompressor-Steuerausgang (4) mit der Entlüftung (3) verbindet.

4. Druckluftaufbereitungseinrichtung nach einem der vorhergehenden Ansprüche, **dadurch gekennzeichnet, dass** das Absperrventil (18) mittels Federkraft in seinen geöffneten Zustand überführbar ist.

5. Druckluftaufbereitungseinrichtung nach einem der vorhergehenden Ansprüche, **dadurch gekennzeichnet, dass** ein Sicherheitsventil (38) vorgesehen ist, das den Druck in der Leitung zwischen dem Kompressor und dem Absperrventil begrenzt.

6. Verfahren zum Betreiben einer Druckluftaufbereitungseinrichtung nach einem der vorangehenden Ansprüche mit den Schritten:
- Überführen des ersten Magnetventils (14) in einen erregten Zustand,
- Überführen des zweiten Magnetventils (16) in einen erregten Zustand,
- Aufrechterhalten dieser Zustände zum Zwecke der Regeneration der Lufttrocknereinheit (32), wobei ein Druck in einer Leitung zwischen dem Kompressor und dem Absperrventil (18) im Wesentlichen erhalten bleibt,
- Überführen des zweiten Magnetventils (16) in einen nicht erregten Zustand und
- Überführen des ersten Magnetventils (14) in einen nicht erregten Zustand.

7. Verfahren zum Betreiben einer Druckluftaufbereitungseinrichtung nach einem der Ansprüche 1 bis 5 mit den Schritten:
- Überführen des zweiten Magnetventils in einen erregten Zustand und
- Aufrechterhalten eines nicht erregten Zustands des ersten Magnetventils und des erregten Zustands des zweiten Magnetventils zum Zwecke der Regeneration einer Leitung zwischen dem Kompressor und der Druckluftaufbereitungseinrichtung.

8. Verfahren nach Anspruch 7, **dadurch gekennzeichnet, dass** es in regelmäßigen zeitlichen Abständen ausgeführt wird.

9. Verfahren nach Anspruch 7 oder 8, **dadurch gekennzeichnet, dass** es bei Vorliegen einer oder mehrerer Bedingungen ausgeführt wird.

## Claims

1. A device for the processing of compressed air for a commercial vehicle, with
- an inlet connection (1) for connecting a compressor,
- a ventilation (3),
- a compressor control outlet (4) for acting with pressure upon a control inlet of the compressor,
- an air dryer unit (32),
- a pneumatically activatable shut-off valve (18) which follows the inlet connection (1) in the flow direction and which can be transferred from an open to a closed state by the action of pressure,
- a pneumatically activatable pressure regulating valve (20) which is arranged between an outlet connection of the shut-off valve (18) and the ventilation (3) and which can be transferred from a closed to an open state by the action of pressure,
- a compressor control device (14, 44) which has a first solenoid valve (14) and via which, in an excited state of the first solenoid valve, compressed air can be supplied to a control inlet of the shut-off valve (18) and to the compressor control outlet (4),
- a second solenoid valve (16) which, in the excited state, allows a backflow of compressed air through the air dryer unit (32) and the pressure regulating valve (20) to the ventilation (3) and via which, in the excited state, a control inlet of the pressure regulating valve (20) can be acted upon with compressed air,
**characterized in that**, with the first solenoid valve (14) excited, the pressure in a line between the compressor and the shut-off valve (18) is essentially maintained.

2. The device for the processing of compressed air as claimed in claim 1, **characterized in that** the first solenoid valve (14), besides activating the shut-off valve and the control valve, does not assume any further control functions relating to the line between the compressor and the shut-off valve.

3. The device for the processing of compressed air as claimed in claim 1 or 2, **characterized**
- **in that** the compressor control device (14, 44) has a control valve (44),
- **in that** compressed air delivered by the first solenoid valve (14) can be supplied to the compressor control outlet (4) via the control valve (44), and
- **in that**, in the absence of compressed air delivered by the first solenoid valve (14), the control valve (44) connects the compressor control outlet (4) to the ventilation (3).

4. The device for the processing of compressed air as claimed in one of the preceding claims, **characterized in that** the shut-off valve (18) can be transferred into its open state by means of a spring force.

5. The device for the processing of compressed air as claimed in one of the preceding claims, **characterized in that** a safety valve (38) is provided which limits the pressure in the line between the compressor and the shut-off valve.

6. A method for operating a device for the processing of compressed air as claimed in one of the preceding claims, having the steps:
- transfer of the first solenoid valve (14) into an excited state,
- transfer of the second solenoid valve (16) into an excited state,
- maintaining these states for the purpose of the regeneration of the air dryer unit (32), a pressure in a line between the compressor and the shut-off valve (18) being essentially maintained,
- transfer of the second solenoid valve (16) into a non-excited state, and
- transfer of the first solenoid valve (14) into a non-excited state.

7. A method for operating a device for the processing of compressed air as claimed in one of claims 1 to 5, having the steps:
- transfer of the second solenoid valve into an excited state, and
- maintaining a non-excited state of the first solenoid valve and the excited state of the second solenoid valve for the purpose of regenerating a line between the compressor and the device for the processing of compressed air.

8. The method as claimed in claim 7, **characterized in that** it is carried out at regular time intervals.

9. The method as claimed in claim 7 or 8, **characterized in that** it is carried out in the presence of one or more conditions.

## Revendications

1. Dispositif à traiter de l'air comprimé pour un véhicule utilitaire, comprenant
- un raccord d'entrée (1) à raccorder un compresseur,
- un moyen de purge de l'air (3),
- une sortie de commande du compresseur (4) à mettre une entrée de commande dudit compresseur sous pression,
- une unité à sécher de l'air (32),
- une soupape d'arrêt (18) à commande pneumatique, en aval dudit raccord d'entrée (1) le long de la direction d'écoulement, qui est apte à être commutée d'un état ouvert en un état fermé en vertu de sa mise sous pression,
- une soupape de réglage de pression (20) à commande pneumatique, qui est disposée entre un raccord de sortie de ladite soupape d'arrêt (18) et ledit moyen de purge de l'air (3), laquelle est commutable d'un état fermé en un état ouvert en vertu de sa mise sous pression,
- un moyen de commande du compresseur (14, 44) renfermant une première électrovanne (14), via laquelle de l'air comprimé se peut alimenter à une entrée de commande de ladite soupape d'arrêt (18) et à ladite sortie de commande du compresseur (4) en un état excité de ladite première électrovanne,
- une deuxième électrovanne (16), qui, en état excité, permet l'écoulement en retour de l'air comprimé à travers ladite unité à sécher de l'air (32) et ladite soupape de réglage de pression (20) à purger de l'air (3), et via laquelle, en état excité, on peut mettre une entrée de commande de ladite soupape de réglage de pression (20) sous pression moyennant de l'air comprimé,
**caractérisé en ce qu'**en état excité de ladite première électrovanne (14), la pression dans un conduit entre ledit compresseur et ladite soupape d'arrêt (18) est essentiellement maintenue.

2. Dispositif à traiter de l'air comprimé selon la revendication 1, **caractérisé en ce que** ladite première électrovanne (14) ne se charge pas des autres fonctions de commande relatives à la conduite entre ledit compresseur et ladite soupape d'arrêt, outres que la commande de ladite soupape d'arrêt et de ladite soupape de commande.

3. Dispositif à traiter de l'air comprimé selon la revendication 1 ou 2, **caractérisé en ce**
- **que** ledit moyen de commande du compresseur (14) comprend une soupape de commande (44),
- **que** de l'air comprimé alimenté moyennant ladite première électrovanne (14) à la sortie de commande du compresseur (4) se peut alimenter via ladite soupape de commande (44), et
- **qu'**en absence de l'air comprimé alimenté moyennant de ladite première électrovanne (14), ladite soupape de commande (44) établit la communication entre ladite sortie de commande du compresseur (4) et ledit moyen de purge de l'air (3).

4. Dispositif à traiter de l'air comprimé selon une quelconque des revendications précédentes, **caractérisé en ce que** ladite soupape d'arrêt (18) se peut commuter en son état ouvert moyennant de tension de ressort.

5. Dispositif à traiter de l'air comprimé selon une quelconque des revendications précédentes, **caractérisé en ce qu'**une soupape de sûreté (38) est disposée, qui limite la pression dans la conduite entre ledit compresseur et ladite soupape d'arrêt.

6. Procédé à actionner un dispositif à traiter de l'air comprimé selon une quelconque des revendications précédentes, comprenant les étapes suivants :
- commutation de ladite première électrovanne (14) en un état excité,
- commutation de ladite deuxième électrovanne (16) en un état excité,
- maintenir ces état pour la régénération de ladite unité à sécher de l'air (32), à la pression dans une conduite entre ledit compresseur et ladite soupape d'arrêt (18) étant essentiellement maintenue,
- commutation de ladite deuxième électrovanne (16) en état non excité, et
- commutation de ladite première électrovanne (14) en un état non excité.

7. Procédé à actionner un dispositif à traiter de l'air comprimé selon une quelconque des revendications 1 à 5, comprenant les étapes suivantes :
- commutation de ladite deuxième électrovanne en un état excité, et
- maintenir un état non excité de ladite première électrovanne et un état excité de ladite deuxième électrovanne pour la régénération d'une conduite entre ledit compresseur et ledit dispositif à traiter de l'air comprimé.

8. Procédé selon la revendication 7, **caractérisé en ce qu'**il se réalise aux intervalles de temps réguliers.

9. Procédé selon la revendication 7 ou 8, **caractérisé en ce qu'**il se réalise au cas de présence d'une ou plusieurs conditions.
